Europäisches Patentamt

European Patent Office

Office européen des brevets

(11) Publication number: **0 360 141**
**A2**

## EUROPEAN PATENT APPLICATION

(21) Application number: 89116931.0

(22) Date of filing: 13.09.89

(51) Int. Cl.⁵: **B29C 63/04** , //B29C53/26

(30) Priority: 19.09.88 IT 4402488

(43) Date of publication of application:
**28.03.90 Bulletin 90/13**

(84) Designated Contracting States:
**DE ES FR**

(71) Applicant: I.D.M.-COSTRUZIONI MACCHINE
SPECIALI LAVORAZIONE LEGNO S.r.l.
**Via Milano 73**
**I-61100 Pesaro(IT)**

(72) Inventor: Natali, Adriano
**Via Aurelio Saffi 13**
**I-61100 Pesaro(IT)**

(74) Representative: Gustorf, Gerhard, Dipl.-Ing.
**Patentanwalt Dipl.-Ing. Gerhard Gustorf**
**Bachstrasse 6 A**
**D-8300 Landshut(DE)**

(54) Device for applying tapes of coating sheet material inside grooves.

(57) Device for applying tapes of coating sheet material inside grooves, particularly for decorating
pressed-wood-shaving panels to form furnishing and
the like, including conveyor and guide means of said
panels under feeding-gluing means of said tapes
over said grooves therein lengthwise inserted and
made stick by following pressure means which are
shaped for entering into said grooves and then levelled by smoothing means of the out projecting
wings.

FIG. 2

**Device for applying tapes of coating sheet material inside grooves**

BACKGROUND OF THE INVENTION

It is well known use of decorating panels to form furnishing, and especially on doors, with grooves made on their surfaces and variously arranged lonely or in groups.

Modern industrial manifacture of furnishing, that uses inexprensive pressed-wood-shaving panels, or at any rate low price wood panels, having a film laminated thereon so that the finished product appears to be made of an expensive wood.or at any rate to form the appearing surface, has a limit in making such grooves, because pressed-wood-shaving panels cannot support slot milling without chipping, although minutely, on groove fillets and inside grooves too, which so cannot remain in appearance not even painted.

According to known art such limit is avoided by applying on panels coating sheet material having pattern looking like decorative grooves; otherwise, limitedly to portions which must be decorated with grooves, by replacing pressed-wood-shaving panels with other-material panels, like masonite or true wood, suitable to be milled and painted.

No comment needs about disadvantages of the first known art; about the second, also in its alternative embodiment providing filling of material capable to be milled embedded in pressed-wood-shaving panels, it results expensive both for material and for manufacturing and painting.

SUMMARY OF THE INVENTION

Mayor object of present invention is therefore to provide decorative grooves directly in pressed-wood-shaving panels coated with sheet material, particularly to form furnishing.

Other object of present invention is to coat said grooves with the same sheet material that coats the panels.

Another object of present invention is to attain above objects by immediate processing on panels formerly coated with sheet material, including also all refinishing, so to improve industrial processing.

Further object of present invention is to accomplish the coating of said grooves whatever may be their number and their orientation on panels.

Still further and not last object of present invention is to attain above objects by means of a simple and effectual device as well as reliable in working and comparatively cheap with reference to practical results.

These and further more objects are all attained by the device for applying tapes of coating sheet material inside grooves, particularly for decorating pressed-wood-shaving panels to form furnishing and the like, according to present invention, including conveyor and guide means of said panels under feeding-gluing means of said tapes over said grooves therein lengthwise inserted and made stick by following pressure means which are shaped for entering into said grooves and then levelled by smoothing means of the out-projecting wings.

Further features and advantages of the device of the present invention will become apparent from the following detailed description of a preferred but not exclusive embodiment.

BRIEF DESCRIPTION OF THE DRAWINGS

The invention will be better understood by way of illustration and not of limitation with reference to the accompanying drawings, in which:

Fig. 1 is a side view of the device according to the present invention.

Fig. 2 is an elevation perspective view of the same device.

Figs. from 3 to 6 show some panels with grooves thereon which can be coated with sheet material by means of the device according to the present invention.

DESCRIPTION OF THE PREFERRED EMBODIMENTS

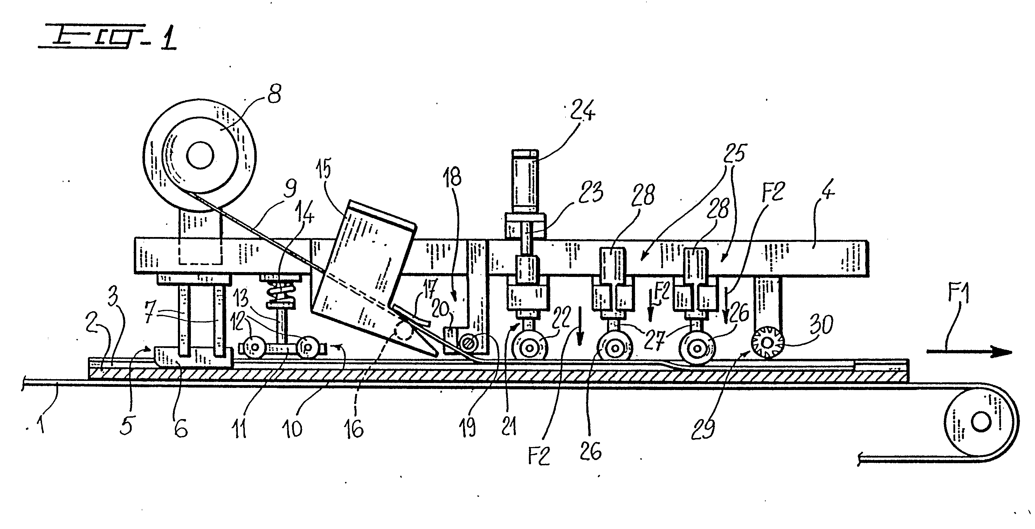

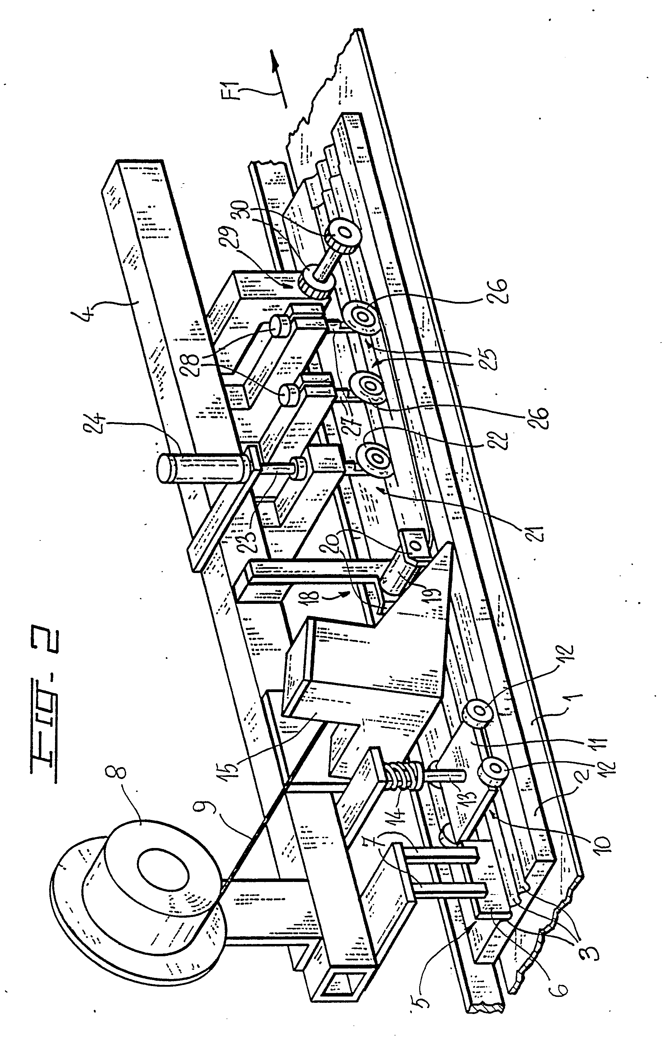

Referring to the drawings and in particular to fig. 2, 1 is a belt conveyor, moved in known way in the direction of arrow 1, supporting one pressed-wood-shaving panel 2 having three lengthwise parallel grooves 3 thereon.

Above the belt 1 one overhanging horizontal beam 4 is provided, that is adjustable for height on the not shown base plate of the device i.e. on belt 1.

The following operation members are fixed, by means of respective not-numbered supporting plates or arms, to said beam 4 (in the order of direction of arrow 1, see also fig. 1):

One piece-guide 5 including one slide 6, that enters into one of the parallel grooves 3, hanged to two bars 7 which usefully, for the below better described operations, can be replaced by pneumatic pistons suitable for lift and lower said slide 6.

One reel 8, placed above the beam 4, that unrolls a tape 9 of coating sheet material for pressed-wood-shaving panels.

One carriage 10, that keeps pressed the panel 2 on belt 1, including a plate 11 (see fig. 2) with four loose rollers 12 vertically pressing by means of a pivot 13 against the action of a spring 14.

One glue-hopper 15 that melts glue and soaks a gluing roller 16 provided thereon, over which a spattle or comb 17 is pressing (see fig. 1).

One tape-guide 18 including a loose roller 19, having rotation axis parallel to said gluing roller 16, and side guide-plates 20 which part towards the same gluing roller 16.

One first pressure element 21 including a loose roller 22 that enters into one of the grooves 3 mating its surface; said roller 22 is supported by a pivot 23 that is vertically moving by means of a pneumatic piston 24.

Two further pressure elements 25 respectively including loose rollers 26 which enter each in one respective groove 3 mating its surface; said rollers 26 are respectively supported by pivots 27 which are sliding through sleeves 28 where not shown springs keep them pressed down (arrows F2).

One leveller element 29 including two millers 30 which work on the plane of the surface of the panel 2.

## OPERATION

The device according to the present invention operates as follows:

On panels 2 formerly coated with coating sheet material, which come one after the other conveyed on belt 1, the parallel grooves are firstly made by means of millers (not shown) which can be usefully provided above the same belt 1 (operating on it) before the device according to the present invention.

When each panel 2 comes under the piece-guide 5, the slide 6 enters in one groove 3 so transversally retaining the same panel 2 that is also vertically retained by pression of carriage 10.

Immediately after, when panel 2 comes closed to the tape-guide 18, on impulse of known type sensors (not shown) the tape 9 is made unroll from reel 8 by unrolling means of known type (not shown); said tape 9 being preferably made of the same coating sheet material that already coats panel 2 and has the same or little more width of plane development of the cross section of the three grooves 3.

The tape 9 is so passed under the comb 17 that presses it on the gluing roller 16, which, in its rotation, receives glue from hopper 15 and spreads it on the below surface of the same tape 9.

This last, further descending, afterwards enters the guide formed by the two plates 20 and passes between said guide-plates 20 under the roller 19, so laying down covering the grooves 3 while the panel 2 advances.

Just when the tape 9, now laid on grooves 3, comes under the first pressure element 21, the roller 22 of this last, that is lifted to avoid hindering of the same tape 9 against it, descends pushed through pivot 23 by the pneumatic piston 24, so pressing the interposed tape 9 inside one groove 3 fitting its shape and therein gluing said tape 9 along whole length of the respective groove 3.

The same operation is also accomplished by the further pressure elements 25, the respective rollers 26 of which, by means of springs (not shown) closed inside the sleeves 28, press the tape 9 inside the respective groove 3, thus gluing it there.

As the tape 9 is normally widther than cross plane development of grooves 3, when the first is made stick inside all these last, the side edges of the tape 9 remain out-projecting and are thus levelled at the plane level of panel 2 by the two millers 30 of the leveller element 29, so that the coating film in such way sticked inside the grooves 3 looks uninterruptedly with the same film that already coats the plane of the panel 2.

When the coating of the grooves 3 is finished, the tape 9 is cut above the gluing roller 16 by shearing means not shown, on impulse of known type sensors not shown, so that the coating operation of the grooves 3 of a further panel 2 can begin.

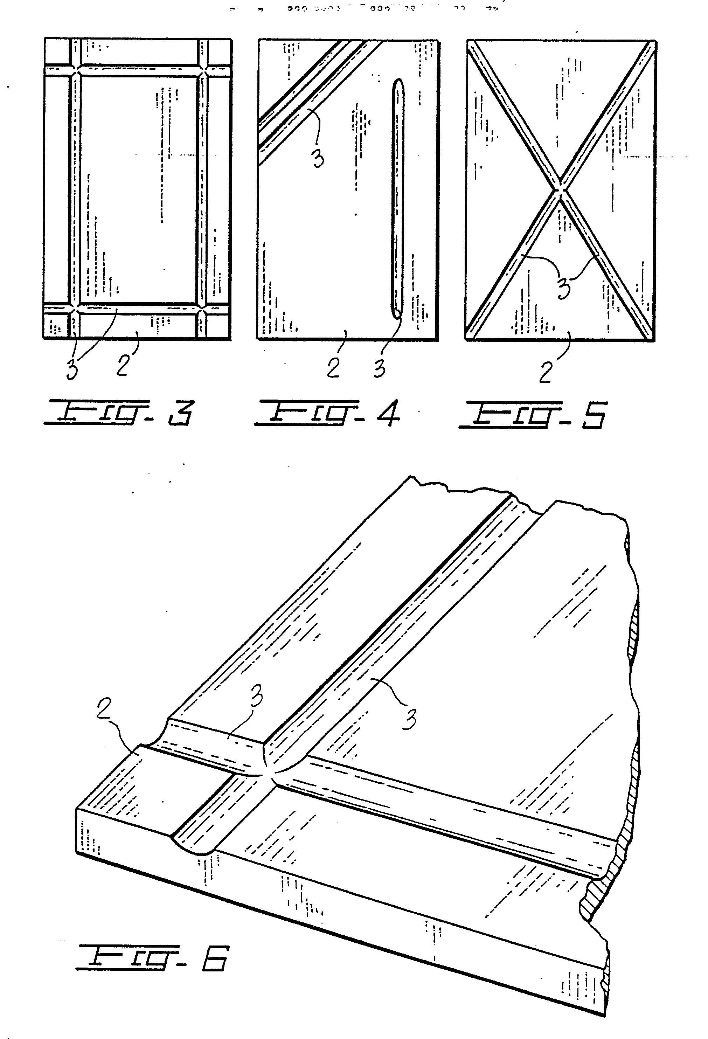

Figs. 3, 4, 5 and 6 respectively show panels 2 with several types of decorative grooves 3 thereon which can be coated with sheet material by means of the device according to the present invention; it is evident that, when the grooves 3 are transversally made on panel 2, it is enough to transversally put the panel 2 on the belt-conveyor 1 (with the aid of not shown bracket means, if that is the case) for attaining the coating of the transversal grooves 3.

Fig 4 shows also one blind or segment groove 3, i.e. one groove 3 that does not cross the whole surface of panel 2 from edge to edge but it is interrupted before said edges; in this case, for usefully accomplishing the coating of said blind or segment groove 3 with sheet material according to the present invention, the piece-guide 5 and all pressure elements 25 can be usefully provided vertically moving by means of pneumatic pistons (not shown) like the first pressure element 21, so to descend, on known-type sensor or timer impulse, when the beginning of the blind or segment groove 3 respectively comes below them.

It must be also noted that the beam 4 is adjustable for height, and in consequence all operative members supported by said beam 4, so to adapt the operative plane to the thickness of panels 2; moreover, every operative member is transversally and longitudinally adjustable.

Furthermore: to rollers 22 and 26 of pressors 21 and 25 can be usefully replaced or added cylinders having parallel round prominences covering several grooves, as well as slides.

Still furthermore: the several kinds of pressure elements, pneumatic or not, can be reduced or increased with reference to the number of grooves to be coated, as well as two or more pressure elements can be provided for every groove and also can be reversed or replaced with reference to operation needs of the moment.

## ADVANTAGES

As can be seen from the foregoing detailed description of the preferred embodiments, the device for applying tapes of coating sheet material inside grooves, constructed and arranged in accordance with the invention offers the advantages corresponding to the attainment of the objects set forth hereinabove.

Specifically the device according to the invention allows usefully making every type of decorative groove immediately on pressed-wood-shaving panels because the so made hollow surfaces are coated with the same sheet material that already coats the surface of the panel; all this immediately and automatically as well as without refinishing operations and with good aesthetical results.

## Claims

1. A device for coating grooves made on panels, comprising conveyor and guide means of said panels under feeding-gluing means of a coating tape over said grooves therein lengthwise inserted and make stick by pressure means which are shaped for entering into said grooves.

2. The coating device of claim 1, comprising smoothing menas for levelling the out projecting wings of the stiched tape.

3. The coating device of claim 1, wherein said conveyor and guide means are formed by a belt and slides entering into said grooves and/or brackets.

4. The coating device of claim 1, wherein said feeding-gluing means are formed by a roller receiving glue from a hopper and spreading glue on the below surface of said tape.

5. The coating device of claim 1, wherein said pressure means are formed by rollers pressed by springs.

6. The coating device of claim 5, wherein said pressure means are formed by cylinders having parallel round prominences and/or are formed by slides.

7. The coating device of claim 5, wherein each of said pressure means is separately vertically moving.

8. The coating device of claim 5, wherein each of said pressure means is separately vertically moving by sensor or timer pneumatic pistons.

9. The coating device of claim 5, wherein each of said pressure means is separately transversally and/or longitudinally adjustable.

10. The coating device of claim 5, wherein said pressure means are interchangeable separately and/or together.

11. The coating device of claims 4 and 5 wherein said feeding-gluing means and said pressure means are supported together by adjustable for height means.

12. The device of claim 2, wherein said smoothing means are formed by millers.

Fig-1

FIG. 2

EP 0 360 141 A2

Fig. 3

Fig. 4

Fig. 5

Fig. 6